# EUROPÄISCHE PATENTANMELDUNG

(11) **EP 1 108 631 A2**
(43) Veröffentlichungstag der Anmeldung: **20.06.2001**
(21) Anmeldenummer: 00125947.2
(22) Anmeldetag: 28.11.2000
(51) Int. Cl.: B60R 25/04

(54) **Vorrichtung zum Diebstahlschutz**

(30) Priorität: 17.12.1999 DE 19960958
(71) Anmelder: ROBERT BOSCH GMBH, 70442 Stuttgart (DE)
(72) Erfinder: Walter, Klaus, 74321 Bietigheim-Bissingen (DE); Prohaska, Werner, 77833 Ottersweiser (DE); Tochtermann, Michael, 74379 Ingersheim (DE)

(57) **Zusammenfassung**

Es wird eine Vorrichtung zum Diebstahlschutz einer in einem Kraftfahrzeug angeordneten Funktionseinheit vorgeschlagen. Ein Steuermittel (26) beeinflußt einen Datenaustausch über zumindest eine Signalleitung (12) zwischen zumindest einem Steuergerät (10, 10a) und einer Funktionseinheit (30). Das Steuermittel (26) tauscht Daten aus mit dem Steuergerät (10, 10a). Das Steuermittel (26) empfängt einen von dem Steuergerät (10, 10a) gesendeten Code (CI*) und vergleicht diesen mit einem erwarteten Code (CI). Das Steuermittel (26) umfaßt Schaltmittel (28), die in Abhängigkeit von dem Vergleich des empfangenen Codes (CI*) mit dem erwarteten Code (CI) den Datenaustausch zwischen dem Steuergerät (10, 10a) und der zumindest einen Funktionseinheit (30) zulassen oder unterbinden.

## Beschreibung

### Stand der Technik

Die Erfindung geht aus von einer Vorrichtung zum Diebstahlschutz nach der Gattung des unabhängigen Anspruchs.

In der DE-A 198 22 322 ist eine elektronische Wegfahrsperre für ein Fahrzeug beschrieben. Zwischen einer für die Berechtigung erforderlichen Identifikationseinheit und einem Steuergerät im Fahrzeug wird ein Frage-Antwort-Dialog durchgeführt, anhand dessen die Zugangs- und/oder Startberechtigung des Fahrzeugs erteilt wird. In einem zusätzlich im Fahrzeug angeordneten Codespeicher ist ein Codewort hinterlegt, das über eine zusätzliche Kommunikationsstrecke in den Frage-Antwort-Dialog des Steuergeräts einbezogen ist. Bei einem fehlenden oder falschen Ansteuersignal des zusätzlichen Codespeichers sperrt das Steuergerät den Zugang oder den Start des Fahrzeugs. Eine physikalische Unterbindung des Datenaustausches ist jedoch nicht vorgesehen.

Der Erfindung liegt die Aufgabe zugrunde, den Diebstahlschutz für weitere in einem Kraftfahrzeug angeordnete Komponenten zu erhöhen. Diese Aufgabe wird durch die Merkmale des unabhängigen Anspruchs gelöst.

### Vorteile der Erfindung

Die erfindungsgemäße Vorrichtung zum Diebstahlschutz einer in einem Kraftfahrzeug angeordneten Funktionseinheit umfaßt ein Steuermittel, das einen Datenaustausch über zumindest eine Signalleitung zwischen zumindest einem Steuergerät und einer Funktionseinheit beeinflußt und Daten austauscht mit einem Steuergerät. Das Steuermittel empfängt im Rahmen einer Berechtigungsprüfung einen von einem, ggf. weiteren Steuergerät(en) gesendeten Code und vergleicht diesen mit einem erwarteten Code. Das Steuermittel umfaßt Schaltmittel, die in Abhängigkeit von dem Vergleich des empfangenen Codes mit dem erwarteten Code den Datenaustausch zwischen dem Steuergerät und der zumindest einen weiteren Funktionseinheit zulassen oder unterbinden. Durch die Anordnung der Schaltmittel zwischen dem Steuergerät und der Funktionseinheit unterbinden sie den ordnungsgemäßen Betrieb der Funktionseinheit durch Unterbrechung der Signalleitung. Eine Funktionseinheit kann somit nur in Verbindung mit einem gültigen Steuergerät und einem gültigen Steuermittel ordnungsgemäß betrieben werden. Die Steuermittel lassen sich direkt in der Funktionseinheit, wie beispielsweise Sensor, Aktuator oder Baustein für ein Bussystem, leicht integrieren. Die Steuermittel könnten jedoch auch in einem die Funktionseinheit mit dem Steuergerät verbindenden Stecker angeordnet werden.

In einer zweckmäßigen Weiterbildung ist vorgesehen, daß die Schaltmittel mit dem Anlegen der Versorgungsspannung die Signalleitung auf Masse legen. Erst nach erfolgreich durchlaufener Berechtigungsprüfung wird die Signalleitung durchgeschaltet. Damit werden wirkungsvoll Manipulationsversuche bei der Inbetriebnahme des Fahrzeugs unterbunden.

In einer vorteilhaften Ausgestaltung sendet das Steuermittel ein Signal an das Steuergerät, das dieses zur Aussendung des Codes veranlaßt. Die Initiierung der Berechtigungsabfrage erfolgt dezentral und kann über das Anlegen der Versorgungsspannung getriggert werden.

Weitere zweckmäßige Weiterbildungen ergeben sich aus weiteren abhängigen Ansprüchen und aus der Beschreibung.

### Zeichnung

Mögliche Ausführungsbeispiele sind in der Zeichnung dargestellt und in der nachfolgenden Beschreibung näher erläutert.

### Es zeigen

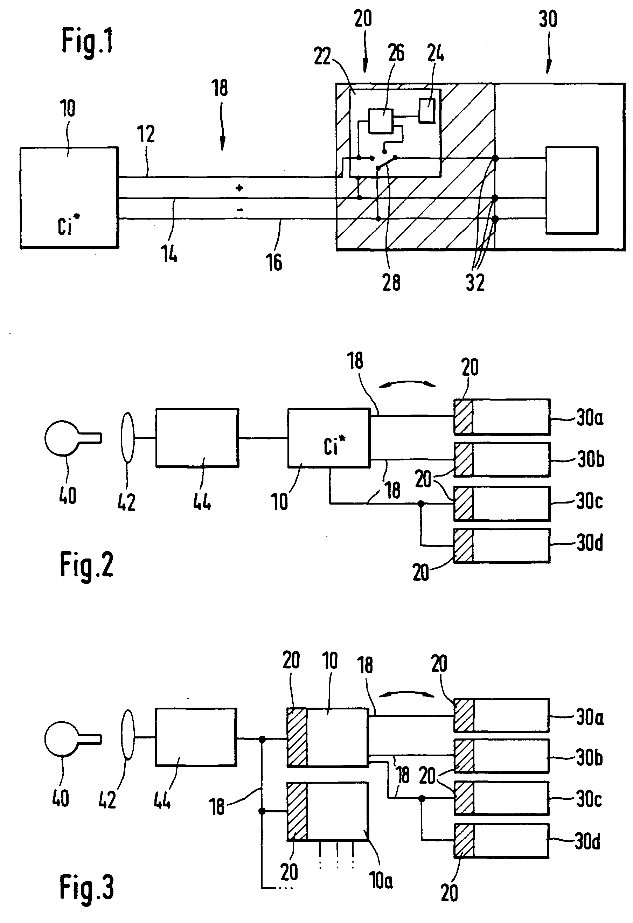

die Figuren 1 bis 3 Blockschaltbilder der erfindungsgemäßen Vorrichtung.

### Beschreibung der Ausführungsbeispiele

Ein Steuergerät 10 ist über ein Bussystem 18, bestehend aus einer Signalleitung 12, einer Versorgungsleitung 14 und einer Masseleitung 16, und einem Stecker 20 verbunden mit einer Funktionseinheit 30. In dem Stecker 20 ist ein Schaltkreis 22 angeordnet, der einen Speicher 24 und ein Steuermittel 26 umfaßt. Das Steuermittel 26 steuert ein ebenfalls in dem Schaltkreis 22 angeordnetes Schaltmittel 28 an. Im geöffneten Zustand verbindet das Schaltmittel 28 die Masseleitung 16 mit der Ausgangsleitung des Steckers 20, die im Normalbetrieb, d.h. bei geschlossenem Schaltmittel 28, die eingehende Signalleitung 18 durchschleift. Die Versorgungsleitung 14 und die Masseleitung 16 werden von dem Schaltkreis 22 nicht beeinflußt und an eine Funktionseinheit 30 weitergeleitet. Die Funktionseinheit 30 ist somit über den Stecker 20 und das Bussystem 18 mit dem Steuergerät 10 verbunden.

Das Ausführungsbeispiel gemäß Figur 1 wird in Figur 2 erweitert. Eine Antenne 42 erfaßt das Signal eines Transponders 40 und gibt dieses an eine Wegfahrsperre 44 weiter. Die Wegfahrsperre 44 ist zum Zweck des Datenaustausches mit dem Steuergerät 10 verbunden. Außerdem sind vier Funktionseinheiten 30a bis 30d dargestellt, die jeweils über einen Stecker 20 gemäß Figur 1 und das Bussystem 18 mit dem Steuergerät 10 verbunden sind.

Beim Ausführungsbeispiel gemäß Figur 3 sind die Steuergeräte 10, 10a jeweils über den Stecker 20 und dem Bussystem 18 mit der Wegfahrsperre 44 verbunden.

In Verbindung mit einem Startwunsch des Fahrzeugbenutzers wird die Spannungsversorgung freigegeben. Damit wird auch der Schaltkreis 22 des Steckers 20 über die Versorgungsleitung 14 mit Energie versorgt. Sobald die Versorgungsspannung an den Schaltkreis 22 angelegt wird, steuert das Steuermittel 26 das Schaltmittel 28 in der Weise an, daß der Ausgang der Signalleitung des Steckers 20 mit der Masseleitung 16 verbunden ist. Diese Situation ist in Figur 1 dargestellt. Dadurch ist ein Signalaustausch zwischen dem Steuergerät 10 und der Funktionseinheit 30 nicht möglich. Das Anlegen der Versorgungsspannung an den Schaltkreis 22 triggert auch die Durchführung der Berechtigungsabfrage zwischen dem Steuergerät 10 und dem Schaltkreis 22. Nur bei nachgewiesener Berechtigung des Steuergeräts 10 wird die Signalleitung 12 auf den Ausgang des Steckers 20 durchgeschleift, so daß das Steuergerät 10 mit der Funktionseinheit 30 in Datenaustausch treten kann. Bei nachgewiesener Berechtigung steuert das Steuermittel 26 das Schaltmittel 28 so an, daß das Schaltmittel 28 den Eingang der Signalleitung 12 direkt mit dem Ausgang der Signalleitung des Steckers 20 verbindet, die der Funktionseinheit 30 zugeführt ist.

In dem Schaltkreis 22 sind entsprechende Algorithmen und Codes CI hinterlegt, mit deren Hilfe die Berechtigung des Steuergeräts 10 überprüft wird. Mit Anlegen der Versorgungsspannung sendet der Schaltkreis 22 über die Signalleitung 12 eine Reizung an das Steuergerät 10. Hierbei kann es sich beispielsweise um eine Zufallszahl handeln. Das Steuergerät 10 empfängt die Reizung, interpretiert dies als einen Befehl, aus der empfangenen Zufallszahl in Verbindung mit einem im Steuergerät 10 hinterlegten Algorithmus und einem Code eine Antwort CI* zu erzeugen. Der in dem Steuergerät 10 hinterlegte Algorithmus und der Code sind mit den im Schaltkreis 22 hinterlegten identisch, wenn es sich um ein berechtigtes Steuergerät 10 handelt. Die Identität der Algorithmen und des Codes überprüft der Schaltkreis 22 anhand des Antwortsignals CI*, das das Steuergerät 10 an den Schaltkreis 22 zurücksendet. Der Schaltkreis 22 berechnet anhand der gesendeten Reizung (Zufallszahl) unter Verwendung des eigenen Algorithmus und des eigenen Codes, die in dem Schaltkreis 22 hinterlegt sind, das erwartete Antwortsignal CI. Stimmt das erwartete Antwortsignal CI mit dem empfangenen Antwortsignal CI* des Steuergeräts 10 überein, dann wird das Steuergerät 10 als berechtigt identifiziert. Diesen Vergleich führt das Steuermittel 26 des Schaltkreises 22 durch. Bei einer Berechtigung steuert das Steuermittel 26 das Schaltmittel 28 so an, daß die Signalleitung 12 auf den Eingang der Funktionseinheit 30 durchgeschleift wird. Die Funktionseinheit 30 und das Steuergerät 10 können miteinander in Datenaustausch treten.

Weichen das erwartete Antwortsignal CI und das empfangene Antwortsignal CI* des Steuergeräts 10 voneinander ab, konnte sich das Steuergerät 10 nicht als berechtigt identifizieren. Die Signalleitung 12 wird nicht auf den Eingang der Funktionseinheit 30 durchgeschleift. Sie verbleibt vielmehr auf Masse 16. Alternativ könnte auch vorgesehen werden, daß der Schaltkreis 22 die Funktionseinheit 30 im Sinne eines Abschaltens oder Sperrens ansteuert. Hierzu muß das Schaltmittel 28 kurzzeitig die Signalleitung 12 durchschleifen, um den Abschaltbefehl des Steuermittels 26 an die Funktionseinheit 30 weiterzuleiten.

Bei dem Steuergerät 10 könnte es sich beispielsweise um ein Motorsteuergerät, Getriebesteuergerät, eine Wegfahrsperre etc. handeln. Als Funktionseinheiten 30 kommen beispielsweise Sensoren zum Einsatz, die bestimmte Betriebszustände des Kraftfahrzeugs erfassen und an das Steuergerät 10 im Normalbetrieb weiterleiten. Auch Aktuatoren können auf diese Art und Weise gegen unberechtigten Betrieb geschützt werden. Die Aktuatoren werden im Normalbetrieb von dem Steuergerät 10 angesteuert. Jede beliebige Funktion ist hierbei denkbar, beispielsweise Verstellantrieb, Zündspule, Einspritzung, Getriebe oder ähnliches könnte als Funktionseinheit 30 verstanden werden.

Der Schaltkreis 22 ist vorzugsweise in einem Stecker 20 zu integrieren, der die entsprechende Funktionseinheit 30 mit dem Bussystem 18 verbindet. Auch könnte der Schaltkreis 22 direkt in der Funktionseinheit 30 integriert sein, vorzugsweise in dem Steuerbaustein für das Bussystem 18. Ebenso könnte der Schaltkreis 22 in dem Kabelbaum des Bussystems 18 eingebettet sein. Steuermittel 26, Schaltmittel 28 und Speicher 24 bilden vorzugsweise einen integrierten Schaltkreis.

In einem alternativen Ausführungsbeispiel gemäß Figur 2 ist die bereits beschriebene Funktionalität mit der Wegfahrsperre 44 verbunden. Ein Benutzer muß sich über den beispielsweise im Zündschlüssel eines Kraftfahrzeugs angeordneten Transponder 40 als berechtigt ausweisen. In dem Transponder 40 ist ein Code hinterlegt, der mit Einführen des Zündschlüssels in das Zündschloß abgefragt wird. Der Transponder 40 sendet sein Codewort an die Antenne 42, die das empfangene Signal an die Wegfahrsperre 44 weiterleitet. Die Wegfahrsperre 44 überprüft, ob das von der Antenne 42 empfangene Codewort mit einem erwarteten Codewort übereinstimmt. Ist dies der Fall, wird auf einen berechtigten Benutzer geschlossen und daraufhin ein Freigabesignal an das Steuergerät 10 gesendet. Nur wenn das Steuergerät 10 die Freigabe erhalten hat, wird es in der bereits beschriebenen Art und Weise ein Antwortsignal CI* an den Schaltkreis 22 auf eine Reizung hin senden.

Auch die Steuergeräte 10, 10a selbst können durch den im Stecker 20 angeordneten Schaltkreis 22 vor Manipulation zusätzlich geschützt werden. Bei dem Ausführungsbeispiel gemäß Figur 3 sendet der Schaltkreis 22, der das Steuergerät 10 vor Manipulation schützt, mit Anlegen der Versorgungsspannung eine Reizung an die Wegfahrsperre 44. Nur bei einem sich über den Transponder 40 als berechtigt ausweisenden Benutzer wird ein Freigabe-Antwortsignal an den entsprechenden Schaltkreis 22 zurückgesendet. In der Wegfahrsperre 44 sind der gleiche Algorithmus und das gleiche Codewort wie in dem Schaltkreis 22 hinterlegt. Nur bei einer gültigen Wegfahrsperre 44, deren Antwortsignal über einen gültigen Transponder 40 freigegeben wird, kann das Steuergerät 10 ordnungsgemäß betrieben werden. Nur bei ordnungsgemäßem Betrieb des Steuergeräts 10 kann die, bereits in Figur 1 beschriebene Berechtigungsabfrage mit den Steckern 20 der weiteren Funktionseinheiten 30a, 30b, 30c und 30d durchgeführt werden. Damit wird der ordnungsgemäße Betrieb des Kraftfahrzeugs nur in dem Fall zugelassen, daß alle Komponenten sich als berechtigt ausgewiesen haben. Die Sicherheit läßt sich durch das hierarchisch aufgebaute Konzept weiter erhöhen.

Die Berechtigungsabfrage muß nicht notwendigerweise zwischen dem Stecker 20 und dem Steuergerät 10 geführt werden, mit dem die durch den Stecker 20 gesicherte Funktionseinheit 30 kommuniziert. Jedes weitere Steuergerät kann hierzu herangezogen werden.

## Patentansprüche

1. Vorrichtung zum Diebstahlschutz mit einem Steuermittel (26), das einen Datenaustausch über zumindest eine Signalleitung (12) zwischen zumindest einem Steuergerät (10, lOa) und zumindest einer Funktionseinheit (30, 30a - 30d) beeinflußt und Daten austauscht mit einem Steuergerät (10, 10a), wobei das Steuermittel (26) mit einem Steuergerät (10, 10a) mittels zumindest eines Codes (CI, CI*) eine Berechtigungsprüfung durchführt, dadurch gekennzeichnet, daß das Steuermittel (26) Schaltmittel (28) umfaßt, die in Abhängigkeit von der Berechtigungsüberprüfung den Datenaustausch zwischen dem Steuergerät (10, 10a) und der zumindest einen Funktionseinheit (30, 30a - 30d) zulassen oder unterbinden.

2. Vorrichtung nach Anspruch 1, dadurch gekennzeichnet, daß im Rahmen der Berechtigungsüberprüfung das Steuermittel (26) einen von dem Steuergerät (10, 10a) gesendeten Code (CI*) empfängt und diesen mit einem erwarteten Code (CI) vergleicht.

3. Vorrichtung nach einem der vorhergehenden Ansprüche, dadurch gekennzeichnet, daß der Datenaustausch zwischen Steuergerät (10, 10a) und der Funktionseinheit (30, 30a-30d) zugelassen ist, wenn der empfangene Code (CI*) mit dem erwarteten Code (CI) übereinstimmt.

4. Vorrichtung nach einem der vorhergehenden Ansprüche, dadurch gekennzeichnet, daß das Schaltmittel (28) die Signalleitung (12) auf Masse (16) legt, wenn der empfangene Code (CI*) und der erwartete Code (CI) nicht übereinstimmen.

5. Vorrichtung nach einem der vorhergehenden Ansprüche, dadurch gekennzeichnet, daß mit dem Anlegen einer Versorgungsspannung die Schaltmittel (28) die Signalleitung (12) auf Masse (16) legen.

6. Vorrichtung nach einem der vorhergehenden Ansprüche, dadurch gekennzeichnet, daß die Steuermittel (26) ein Signal an das Steuergerät (10, lOa) senden, das dieses zur Aussendung des empfangenen Codes (CI*) veranlaßt.

7. Vorrichtung nach einem der vorhergehenden Ansprüche, dadurch gekennzeichnet, daß die Steuermittel (26) in einem Stecker (20) angeordnet sind, der die zumindest eine Funktionseinheit (30) mit zumindest der Signalleitung (12) verbindet.

8. Vorrichtung nach einem der vorhergehenden Ansprüche, dadurch gekennzeichnet, daß der Stecker (20) und die Funktionseinheit (30) lösbar miteinander verbunden sind.

9. Vorrichtung nach einem der vorhergehenden Ansprüche, dadurch gekennzeichnet, daß die Steuermittel (26) und/oder die Schaltmittel (28) fest in der Funktionseinheit (30) integriert sind.

10. Vorrichtung nach einem der vorhergehenden Ansprüche, dadurch gekennzeichnet, daß die Codeübertragung zwischen dem Steuergerät (10, 10a) und dem Steuermittel (26) verschlüsselt erfolgt.

11. Vorrichtung nach einem der vorhergehenden Ansprüche, dadurch gekennzeichnet, daß die Signalleitung (12) auf der Seite der Funktionseinheit (30) auf Masse (16) gelegt wird.

12. Vorrichtung nach einem der vorhergehenden Ansprüche, dadurch gekennzeichnet, daß das Steuergerät (10, 10a, 44) nur dann ein Antwortsignal an das Steuermittel (26) sendet, wenn über einen Signalaustausch mit einem Transponder (40) dieser als berechtigt identifiziert wurde.
